# EUROPEAN PATENT SPECIFICATION

(11) **EP 2 919 900 B1**
(45) Date of publication and mention of the grant of the patent: **28.06.2017**
(21) Application number: 13792717.4
(22) Date of filing: 24.10.2013
(51) Int. Cl.: B01J 19/00, B01J 19/18, B01F 7/16, B09B 3/00, C05F 3/00, C05F 9/00, C05F 17/00, C05F 17/02, C05F 11/00, C05F 11/02

(54) **METHOD AND ARRANGEMENT FOR PROCESSING ORGANIC WASTE**
VERFAHREN UND ANORDNUNG ZUR VERARBEITUNG ORGANISCHER ABFÄLLE
PROCÉDÉ ET SYSTÈME POUR LE TRAITEMENT DE DÉCHETS ORGANIQUES

(30) Priority: 24.10.2012 FI 20126102
(43) Date of publication of application: 23.09.2015
(73) Proprietor: Ecolution OY, 03100 Nummela (FI)
(72) Inventor: PIIRA, Tiina, FI-02130 Espoo (FI); RANTALA, Risto, FI-02130 Espoo (FI); LAULUMAA, Pirjo, FI-07110 Hinthaara (FI); MULTANEN, Jari, FI-04250 Kerava (FI)
(74) Representative: Boco IP Oy Ab
(86) International application number: PCT/FI2013/051005
(87) International publication number: WO 2014/064338

(56) References cited:
- GB-A- 2 484 409
- KR-A- 20050 016 821
- KR-B1- 100 863 190

## Description

### Field of the invention

The present invention relates to an arrangement for processing organic waste. The invention also relates to a method for processing organic waste. The invention further relates to use of the method or the arrangement for processing of organic waste in the form of household waste.

### Background of the invention

Producers and processors of organic waste are searching the most efficient way to minimize their costs. General waste management strategies in many countries aim at reduction of greenhouse gases by recycling and utilization of wastes. The conventional methods for processing organic waste in bioreactors often encounter a problem that aeration of the organic waste mass cannot be arranged evenly. Organic waste mass in reactors frequently contain anaerobic pockets or blocks. Known systems are mostly horizontal composters or composting apparatuses.

Attempts have been made to solve the above mentioned problems by providing various bioreactors. Composters have been one option. Patent publication US 2005/0260744 discloses a vertical composting system, wherein the material introduced into the vessel moves from the upper region of the vessel gravitationally to the lower region of the vessel. Patent publication WO 2004/022508 discloses a vertical composting apparatus comprising vertically arranged segregated processing zones. Furthermore patent publications KR 100 863 190 B, KR 2005 0016821 A, GB 2 484 409 A, WO 99/16730, US 5,258,306, DE 2411491, KR 2040076914, US 3,314,765 and GB 672913 disclose a composting apparatuses and fermentors.

Existing methods and apparatuses have, however, not succeeded to provide sufficient aeration in bioreactors. Aeration is usually not sufficient in known horizontal bioreactors, which often have little space for oxygen and insufficient amount of oxygen during processing. The problems have been attempted to be solved using e.g. shredders or supporting agents.

### Short description of the invention

The present invention overcomes at least partly the shortcomings of the prior art by providing an arrangement and a method for processing organic waste. It is therefore an object of the present invention to provide a new and improved arrangement and method for processing organic waste.

The invention is characterized by the features that are enlisted in the independent claims. Preferred embodiments of the invention are defined in the dependent claims.

According to a first aspect of the present invention there is provided an arrangement for processing organic waste, which comprises a vessel for processing organic waste, an inlet for feeding organic waste into the vessel, an outlet for discharging processed organic waste in the form of reject from the vessel, supporting means comprising at least one support structure for carrying organic waste in said vessel, moving means for moving organic waste on at least one support structure for carrying organic waste in said vessel, supplying means for supplying gas into said vessel, and gas discharging means for discharging exhaust gas. The arrangement is further characterized by that said supplying means are configured to direct gas into organic waste carried on at least one support structure, and said moving means are configured to move organic waste fed via the inlet into the vessel in direction from the inlet to the outlet to at least partly prevent incoming organic waste to mix with organic waste present in the vessel.

The present inventors have surprisingly developed a novel arrangement and method to process organic waste by utilizing a novel aeration system. The present inventors have invented a vertical bioreactor for processing organic waste. In the bioreactor aeration is particularly efficient and directed inside the organic waste to be processed. An advantage of the present invention is that formation of the anaerobic pockets or blocks into the waste mass is hindered by effective aeration. Furthermore, acid fermentation and formation of methane are prevented. The aim of the process is not the production of mulch but the disposal of organic waste as much as possible. An advantage of the present invention is that the volume of the waste is reduced remarkably. This minimizes a need for transportation and consequently reduces transport costs. Furthermore, greenhouse gas emissions caused by transportation are reduced.

The vessel of the present invention is air proof or operates under light vacuum. Harmful gases, such as bio-aerosols, are not released into the atmosphere and elements that are valuable to natural cycles are preserved. The process takes from few days to two weeks, depending on the nature of the organic waste.

The present invention solves the problems related to the existing methods. The problems related to aeration and mixing of the waste have hindered the efficient utilization of organic waste.

The nutrients released from the organic waste are recovered in reject. Excess moisture is mainly removed from the exhaust air by condensation. Effective aeration which is directed inside the organic waste mass may make the use of organic or inert prop unnecessary. Consequently, the amount of end product, reject, is small compared to input amount. This means that the volume of the waste is remarkably reduced.

According to an embodiment of the invention the vessel comprises a top comprising the inlet for feeding organic waste into the vessel.

According to an embodiment of the invention the vessel comprises a bottom comprising the outlet for discharging processed organic waste in the form of reject from the vessel.

According to an embodiment of the invention the arrangement further comprises recovering means for recovering reject.

According to an embodiment of the invention the vessel comprises several support structures, and the moving means are configured to move organic waste fed via the inlet into the vessel in direction from the inlet to the outlet from one support structure to another support structure to at least partly prevent incoming organic waste to mix with the organic waste present in the vessel.

According to an embodiment of the invention moving means for moving organic waste may comprise one or more wings or blades adjusted to moving arms. Arm assemblies may be supported at the common central shaft. The central shaft revolves and causes the arms and wings (sweep paddle) to revolve with it.

According to an embodiment of the invention moving means comprise one or more blades having different blade angles on each support structure.

According to an embodiment of the invention said moving means are configured at the same time to move and turn over organic waste on the support structure, and/or said moving means are configured to move organic waste from the center of the support structure to the edge of the support structure, or from the edge of the support structure to the center of the support structure.

According to an embodiment of the invention supplying means for supplying gas into the vessel and configured to direct gas into organic waste comprise at least one pipe means projecting from at least one support structure. Said supplying means for supplying gas into the vessel are configured to feed air or oxygen, or a combination thereof.

According to an embodiment of the invention the arrangement further comprises condensing means for removing moisture from exhaust gas.

According to an embodiment of the invention the arrangement further comprises one or more pre-treatment means for processing the organic waste to be fed into the vessel, wherein the pre-treatment means are selected from the group consisting of crushing means, heating means, and cooling means. In addition to or instead of the above mentioned pre-treatment means, other suitable means may be used, preferably at an optimal temperature, before feeding into the reactor vessel.

According to an embodiment of the present invention the arrangement further comprises monitoring means for monitoring the process.

According to an embodiment of the invention the arrangement comprises insulation means for thermally insulating the vessel. The arrangement may further comprise a condenser.

According to an aspect of the invention there is provided a method for processing organic waste, wherein the method comprises the steps of providing an arrangement for processing organic waste comprising a vessel with an inlet for feeding organic waste into said vessel, and with an outlet for discharging processed organic waste in the form of reject from the vessel; feeding organic waste into said vessel through the inlet; moving organic waste on at least one support structure in said vessel in direction from the inlet to the outlet to at least partly prevent incoming organic waste to mix with organic waste present in the vessel; supplying gas into the organic waste carried on at least one support structure, discharging processed organic waste in the form of reject from the vessel; and discharging exhaust gas from the vessel via gas discharging means.

According to an embodiment of the invention the method further comprises a recovering step of at least partly recovering reject that is discharged via the outlet. Said reject is discharged as solid. The reject comprises e.g. inorganic salts, microbes, such as aerobic microbes, water, and reformed organic matter.

According to an embodiment of the invention by using a vessel comprising several support structures, and moving means organic waste fed via the inlet into the vessel is moved in direction from the inlet to the outlet from one support structure to another support structure to at least partly prevent incoming organic waste to mix with the organic waste present in the vessel.

According to an embodiment of the invention moving organic waste comprises at the same time moving and turning over organic waste on the support structure with moving means, wherein said moving means comprise one or more blades having different blade angles on each support structure, and/or wherein said moving means move organic waste from the center of the support structure to the edge of the support structure, or from the edge of the support structure to the center of the support structure.

According to an embodiment of the invention supplying gas into the organic waste comprises directing gas into the organic waste through at least one pipe means projecting from at least one support structure. Gas may be air or oxygen, or a combination thereof.

According to an embodiment of the invention the method further comprises removing moisture from exhaust gas.

According to an embodiment of the invention the method further comprises at least one pre-treatment step processing the organic waste to be fed into the vessel, wherein the pre-treatment step is selected from the group consisting of crushing the organic waste, heating the organic waste, and cooling the organic waste. In addition to or instead of the above mentioned pre-treatment steps, other suitable pre-treatment steps may be used. Preferably the pre-treatment step is carried out at an optimal temperature.

According to an embodiment of the invention the method further comprises a step of monitoring temperature, pH value, and/or microbial activity of a process.

According to an embodiment of the invention the method comprises thermally insulating the vessel.

The present invention also relates to the use of the arrangement or method for processing of organic waste in the form of household waste.

### List of figures

In the following the invention will be described with reference to accompanying figures, in which
- Figure 1: shows a flow sheet of an embodiment of the invention.
- Figure 2: shows a flow sheet of a second embodiment of the invention.
- Figure 3: shows a flow sheet of a third embodiment of the invention.
- Figure 4: shows a flow sheet of a fourth embodiment of the invention.

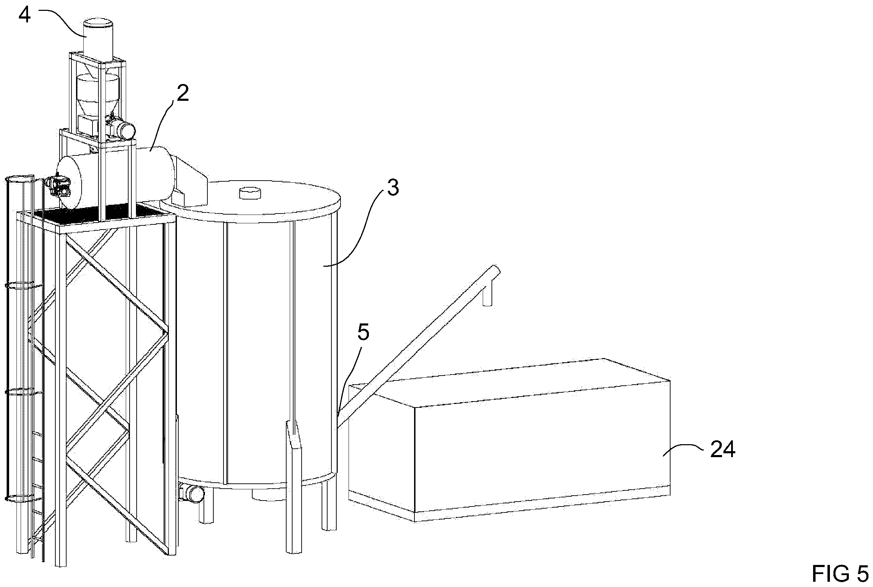

- Figure 5: shows a simplistic figure of an arrangement.

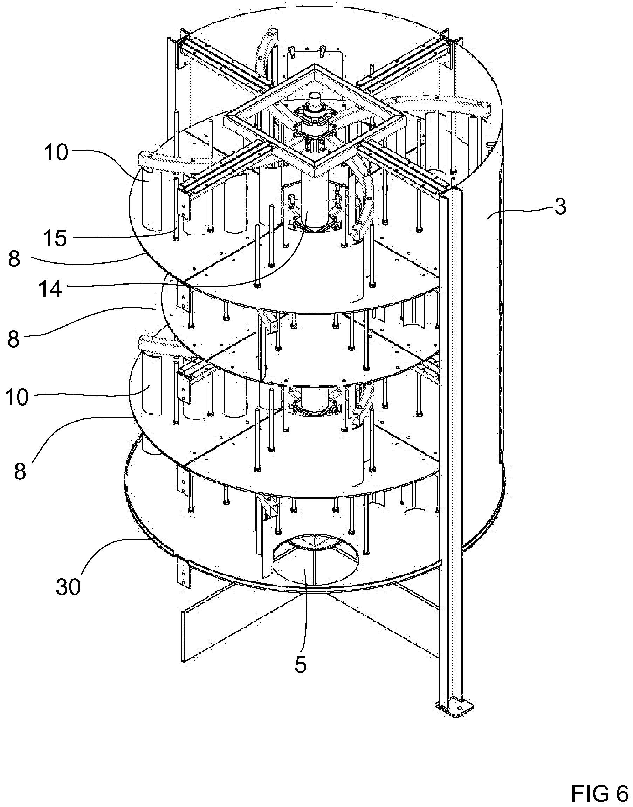

- Figure 6: shows a reaction vessel.

### Detailed description of the invention

Next the arrangement and the method for processing organic waste 1 and some preferred embodiments thereof is described in more detail by referring to figures.

Unless otherwise specified, the terms used have the meaning commonly used in the art, such as field of waste treatment, waste processing, and microbiology. Some terms may, however, be used to describe in a somewhat different manner and some terms benefit from additional explanation.

The term "organic waste" refers to any carbon and nitrogen rich material of biological origin or waste or organic raw material originating from organic source or matter. Organic waste may comprise, but is not restricted to organic material or materials selected from plant and animal materials such as biodegradable organic material. Organic waste or organic raw material may comprise household waste e.g. fruits and vegetables, meat, poultry, and seafood, eggshells, rice, beans, cheese, bones. Organic waste may comprise plants, flowers and all yard waste. All organic matter is made up of substantial amounts of carbon combined with lesser amounts of nitrogen. Organic waste may comprise oils, such as mineral oils. Oils or organic waste may originate from animal or plant origin. All organic microbial waste from biofuel industry may be used in the present invention.

In the arrangement and method also packaging material may be included in the process. Packaging material may comprise waxed cardboard products, frozen/refrigerated food boxes, napkins, paper towels, paper plates, milk cartons, tea bags, coffee grounds and filters, parchment and waxed papers.

The term "processing organic waste" refers to processing, treating organic waste, or organic matter. It also refers to aerobic waste treatment, household waste treatment, biowaste aerobic treatment, or organic waste treatment.

The following detailed description refers to particular embodiments of the present invention. The presently disclosed embodiments are to be considered solely as illustrative and not restricting the scope of the invention.

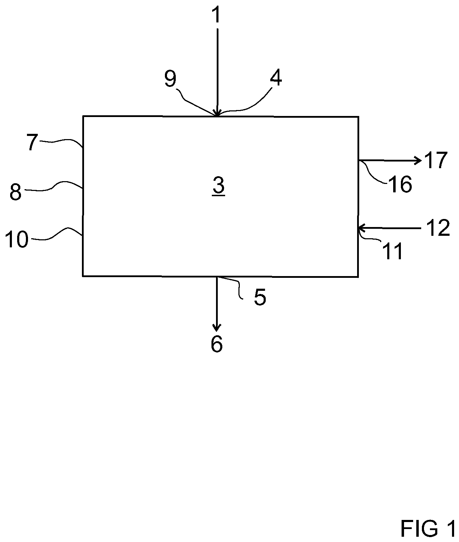

The present invention relates to an arrangement for processing organic waste 1 presented in Fig. 1, comprising a vessel 3 for processing organic waste 1, an inlet 4 for feeding organic waste 1 to be processed into the vessel 3, an outlet 5 for discharging processed organic waste in the form of reject 6 from the vessel 3, supporting means 7 comprising at least one support structure 8 for carrying organic waste 1 in said vessel 3, moving means 10 for moving organic waste 1 on at least one support structure 8 for carrying organic waste 1 in said vessel 3, supplying means 11 for supplying gas 12 into said vessel 3, and gas discharging means 16 for discharging exhaust gas 17. Said supplying means 11 for supplying gas 12 into said vessel 3 are configured to direct gas 12 into organic waste 1 carried on at least one support structure 8. Said moving means 10 for moving organic waste 1 are configured to move organic waste 1 fed via the inlet 4 into the vessel 3 in direction from the inlet 4 to the outlet 5 to at least partly prevent incoming organic waste 1 to mix with organic waste 1 present in the vessel 3.

Separately collected organic waste 1 is taken into the reaction vessel 3, preferably an upright or vertical vessel 3 or cylindrical apparatus or container. The vessel 3 may be made of any suitable inert material, such as stainless steel. Alternatively, the vessel 3 may be coated with any suitable material. A skilled person in the art is aware of suitable materials available.

The arrangement of the present invention is preferably of industrial size. An advantage of the present arrangement and method is, however, a small size compared to existing systems. Furthermore, the arrangement of the present invention is smaller than most present industrial anaerobic waste treatment plants.

The size of the vessel 3 may be of any size suitable for processing organic waste 1. Preferably the diameter of the reaction vessel 3 is from about 1 to 6 meters, such as 1, 2, 3, 4, 5, or 6 meters, more preferably from about 1 to 3 meters. The height of the reaction vessel 3 is preferably from about 0.5 to 10 meters, such as 0.5, 1, 2, 3, 4, 5, 6, 7, 8, 9, or 10 meters. More preferably the vessel 3 is from about 4 to 6 meters in height. In an embodiment of the invention the size of the vessel 3 is about 1.7 m in diameter and about 2 meters in height. In another embodiment the diameter of the vessel 3 is about 3 meters and the height is about 5 meters. The net volume of the reaction vessel 3 may be from 3 m³ to 280 m³, such as about 5, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270 or 275 m³. In a non-limiting example of the invention the net volume is about 3.5 m³, wherein the height of the vessel 3 is 2 meters and the diameter is 1.5 meters. In another example the height of the vessel 3 is 5.5 meters and the diameter is 3.3 meters, the net volume being 47 m³. In another example the height of the vessel 3 is 5 meters and the diameter is 3 meters, the net volume being 37 m³.

The vessel 3 is airtight, airproof or operates under light or partial vacuum apart from an inlet 4 for feeding organic waste 1 to be processed into the vessel 3, an outlet 5 for discharging processed organic waste 1 from the vessel 3, supplying means 11 for supplying gas 12 into the vessel 3, and gas discharging means 16 for discharging exhaust gas 17. Because of the closed process the odors in the surroundings of the vessel 3 are meaningless and consequently no harmful gases are released into the atmosphere.

In the present invention the organic waste 1 may be any organic material. Organic material is selected from plant and animal materials such as biodegradable organic material. Organic disposal may comprise household waste e.g. fruits and vegetables, meat, poultry, and seafood, eggshells, rice, beans, cheese, bones, plants and flowers. The organic waste 1 may also contain packaging material such as waxed cardboard products, frozen/refrigerated food boxes, napkins, paper towels, paper plates, milk cartons, tea bags, coffee grounds and filters, parchment and waxed papers. All yard waste may be processed in the present invention.

The inlet 4 for feeding organic waste 1 into the vessel 3 is located preferably at a top 29 of said vessel 3. The feeding means 31 for feeding organic waste 1 into the vessel 3 may, however, locate remote from the inlet 4, e.g. on the ground beside the vessel 3. Conduit means may be used for feeding organic waste 1 to reactor vessel 3, or for feeding fine-divided waste from pre-treatment unit 2 to the reactor vessel 3.

The outlet 5 for discharging organic waste, such as processed organic waste, in the form of reject 6 from the vessel 3 is preferably located at a bottom 30 of said vessel 3.

The arrangement of the present invention may further comprise recovering means 13 for recovering reject 6. The recovering means 13 for recovering reject 6 are configured to collect reject 6. The reject 6 may be a solid fraction. The reject may include water 28. Nondegradable, inert waste is removed within reject 6.

The vessel 3 may comprise several support structures 8, and the moving means 10 may be configured to move organic waste 1 fed via the inlet 4 into the vessel 3 in direction from the inlet 4 to the outlet 5 from one support structure 8 to another support structure 8 to at least partly prevent incoming organic waste 1 to mix with the organic waste 1 present in the vessel 3.

In an embodiment of the invention there is at least one support structure 8 or supporting layer. Preferably, the apparatus comprises more than one supporting layers, more preferably there are 2 to 10 supporting layers, such as 2, 3, 4, 5, 6, 7, 8, 9, or 10 supporting layers. Support structures are preferably so frequently configured that gas, i.e. air or oxygen, or a mixture thereof, is available to organic waste mass.

The support structure 8 or supporting layer may comprise holes. In alternate layers a hole in the support structure 8 is distal to the central pole and in alternate support structures 8 proximal to the central pole.

Moving means 10 for moving organic waste 1 may comprise wings or blades 32 adjusted to moving arms. Preferably moving means 10 are adjustable. Arm assemblies may be supported at the common central shaft. Arm assembly is preferably curved or arched. The central shaft revolves and causes the arms and wings (sweep paddle) to revolve with it. Moving means 10 are preferably configured at the same time to move and turn over organic waste 1 on the support structure 8. The central shaft revolves preferably at the constant speed. Preferably the moving means 10 comprise one or more wings or blades 32. Wings or blades 32 in moving means 10 are preferably configured to have different blade angles on each support structure 8. Moving means 10 are preferably configured to move organic waste 1 to desired direction with a desired speed, preferably at a constant speed. Preferably moving means 10 are configured to move organic waste 1 from the center of the support structure 8 to the edge of the support structure 8, or from the edge of the support structure 8 to the center of the support structure 8.

According to an embodiment of the invention supplying means 11 for supplying gas 12 into the vessel 3 and configured to direct gas 12 into organic waste 1 comprise at least one pipe means 15 projecting from at least one support structure 8. In an arrangement according to the invention the aeration is particularly efficient, because the vessel 3 is configured to direct gas 12 into organic waste 1. In this way anaerobic pockets or blocks are not formed in the waste mass. Pipe means 15 projecting from the support structure 8 are preferably hollow in order to direct gas 12 into the organic waste 1 mass. Gas 12 may be air of oxygen, or a combination thereof. Said supplying means 11 for supplying gas 12 into the vessel 3 are configured to feed air or oxygen, or a combination thereof.

Moving means 10 and pipe means 15 are preferably configured to function in a synchronized manner.

The arrangement may further comprise condensing means 9 for removing excess moisture from exhaust gas 17. Exhaust gas 17 is carbon dioxide. The produced gas can be used e.g. in greenhouse cultivation or filtered making it safe to release into the environment. Excess moisture may be recycled back to vessel 3.

The arrangement of the present invention may further comprise one or more pre-treatment means 18 for processing organic waste 1, preferably at an optimal temperature, before feeding into the reactor vessel 3. The pre-treatment means 18 may comprise one or more means selected from the group consisting of crushing means 19, heating means 20, and cooling means 21.

According to an embodiment of the invention the crushing step comprises disintegrating or fine-dividing organic waste 1 to form fine-divided waste with a crusher, which is arranged in a separate crushing vessel. Organic waste 1 is optionally ground or fine-divided in a pre-treatment unit 2, such as a shredder 29. A person skilled in the art is able to select a suitable crushing method and a suitable shredder. Packaging material, such as food packages, need not be separated from the organic waste 1 to be processed. For example plastic as an inert material passes the apparatus and can be collected at the end. Also bones can be inserted into the apparatus.

In case the organic waste 1 is stored outdoors heating means may be needed to control or raise the temperature of the waste mass. Organic waste 1 that is frozen or partly frozen is melted by preheating in the pre-treatment unit 2. Heating is preferable in outdoor use, but not in indoor use of the arrangement.

The present arrangement may further comprise monitoring means 22 for monitoring or controlling the process. Any suitable monitoring and/or process control system can be used in the arrangement. A suitable process control system is a control center, which constantly receives process data. Process control system is based on monitoring the microbiological decomposition. Process control is automatic and it maintains optimum conditions for aerobic microbial decomposition inside the reaction vessel 3. A skilled person in the art is aware of available monitoring means 22 and is able to select a suitable monitoring system.

The arrangement may comprise insulation means for thermally insulating the vessel 3.

The present invention further comprises a method for processing organic waste 1, wherein the method comprises the steps of providing an arrangement for processing organic waste 1 comprising a vessel 3 with an inlet 4 for feeding organic waste 1 into said vessel 3, and with an outlet 5 for discharging processed organic waste in the form of reject 6 from the vessel 3; feeding organic waste 1 into said vessel 3 through the inlet 4; moving organic waste 1 on at least one support structure 8 in said vessel 3 in direction from the inlet 4 to the outlet 5 to at least partly prevent incoming organic waste 1 to mix with organic waste 1 present in the vessel 3; supplying gas 12 into organic waste 1 carried on at least one support structure 8; discharging processed organic waste 1 carried on at least one support structure 8; discharging exhaust gas 17 from the vessel 3 via gas discharging means 16.

The retention time of the process of the present invention is at least 1 day, such as 2, 3, 4, 5, or 6 days, preferably at least 1 week, such as 7, 8, 9, 10, or 11 days more preferably 1.5 to 2 weeks, such as 12, 13, or 14 days. The duration of the process time depends on the composition of the organic waste 1.

The present method may further comprise a step of recovering reject 6, at least partly recovering reject 6 that is discharged via the outlet 5. The reject 6 may be removed as solid phase. The present method may further comprise a step of removing excess moisture from exhaust gas 17. There may be a partial vacuum inside the vessel 3.

In the present invention using a vessel 3 comprising several support structures 8 and moving means 10 organic waste 1 fed via the inlet 4 into the vessel 3 is moved in direction from the inlet 4 to the outlet 5 from one support structure 8 to another support structure 8 to at least partly prevent incoming organic waste 1 to mix with the organic waste 1 present in the vessel 3. Preferably the incoming organic waste 1 is not mixed with the organic waste 1 present in the vessel 3. Organic waste 1 may be moved using blades 32 or wings adjusted to moving arms. Preferably organic waste 1 is moved using adjustable moving means 10. The arm assemblies may be supported at the common central shaft, which revolves and causes the arms and wings to revolve with it. Moving means 10 at the same time move and turn over organic waste 1 on the support structure 8. The central shaft preferably revolves at a constant speed. Preferably the moving means comprise one or more wings or blades 32. Wings or blades 32 in moving means 10 preferably have different blade angles on each support structure 8. Moving means 10 move organic waste 1 to desired direction at desired speed, preferably at a constant speed. Preferably moving means 10 move organic waste 1 from the center of the support structure to the edge of the support structure 8, and/or from the edge of the support structure 8 to the center of the support structure 8. Moving means 10, such as blades 32 transfer the mass from one support structure 8 to a next support structure 8.

In the present invention the step of supplying gas into the organic waste 1 mass may comprise directing gas 12 into the organic waste 1 mass through at least one pipe means 15 projecting from at least one support structure 8. The aeration is particularly efficient, since the vessel 3 is adjusted to direct gas 12 into the organic waste 1. Gas 12 may be air or oxygen, or a combination thereof. The aeration gas may be reused in the process.

The method may further comprise at least one pre-treatment step for processing organic waste 1, preferably at an optimal temperature, before feeding the optionally crushed waste into the vertical reactor vessel 3, wherein the pre-treatment step is selected from the group consisting of crushing the organic waste 1, heating the organic waste 1, cooling the organic means, or any method necessary or suitable to the type of waste. The crushing step may comprise fine-diving organic waste 1 to form fine-divided waste with a crusher or shredder 29, which is arranged in a separate crushing vessel. The temperature inside the vessel 3 is raised to the level wherein the hygiene requirements are fulfilled. Preferably the temperature is quickly raised to the hygienic level. The temperature is dependent on the type of the organic waste 1 used. The temperature of the organic waste is from 40°C to 80°C, such as about 40°C, 45°C, 50°C, 55°C, 60°C, 65°C, 70°C, 75°C, or 80°C. Temperature is monitored at several points during the process in order to ensure that an optimal temperature is maintained during the process. The waste is defrosted if necessary. The method may comprise thermally insulating the arrangement vessel 3 using insulation means 23. The process may be assisted by warming the gas which is supplied into the arrangement. Extra water may be removed before and/or during pre-treatment.

In the present method and arrangement the term "micro-organism" refers to any micro-organism capable of decomposing organic waste 1. Such micro-organisms include bacteria and ray bacteria (former Actinomycetes) (and fungi) that are suitable for aerobic microbiological decomposition of organic matter. (See e.g. Insam, Riddech and Klammer, Eds. (2002). Microbiology of composting. Berlin-Heidelberg, Springer). The start of aerobic decomposition is ensured by inoculating each type of organic waste 1 with a suitable decomposing micro-organism. Means for inoculating micro-organisms comprise adding microbes. Micro-organisms are present inside the vessel 3 and after the first inoculation at the beginning of the process subsequent inoculations are not necessary during the process. A skilled person in the art is able to determine suitable microorganism to be used in the present invention based on the type of organic waste 1. The method may comprise a step of monitoring microbial activity of a process.

The method may further comprise a step of monitoring or controlling the process. Process control system in the present invention is based on monitoring the microbiological decomposition. Process control is automatic and it maintains optimum conditions for aerobic microbial decomposition inside the reaction vessel 3. The pH of the process varies according to ammonium level of the waste mass. The method may comprise a step of monitoring pH value, preferably pH level is continuously monitored during the process.

The present invention also relates to the use of the arrangement or method for the processing of organic waste 1 in the form of household waste.

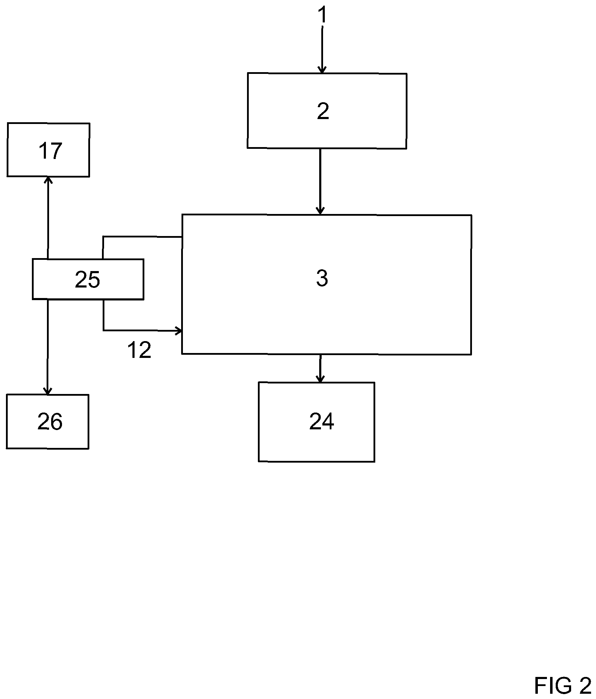

According to an embodiment disclosed in Fig. 2 an arrangement of the invention comprise a pre-treatment unit 2, and a vessel 3 for processing organic waste 1. The arrangement further comprises a solid reject container 24 for recovering reject 6. Exhaust gas 17 and water 26 are discharged via a condenser 25. A portion of gas 12 is directed back to the vessel 3.

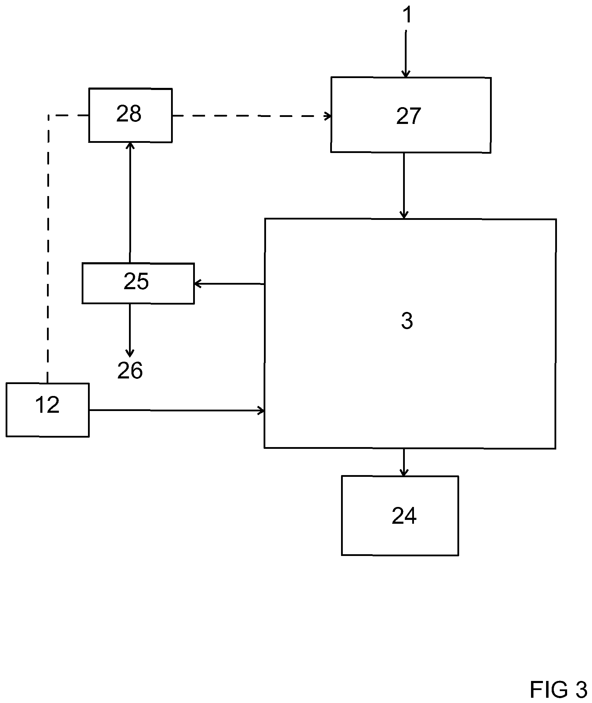

According to an embodiment disclosed in Fig. 3 an arrangement of the invention comprises a shredder 27, and a vessel 3 for processing organic waste 1. The arrangement further comprises a solid reject container 24 for recovering reject 6. Water 26 is discharged via a condenser 25. Gas 12 is supplied into the vessel 3 and via a filter 28 into the shredded 27. A portion of gas 12 is directed back to the vessel 3.

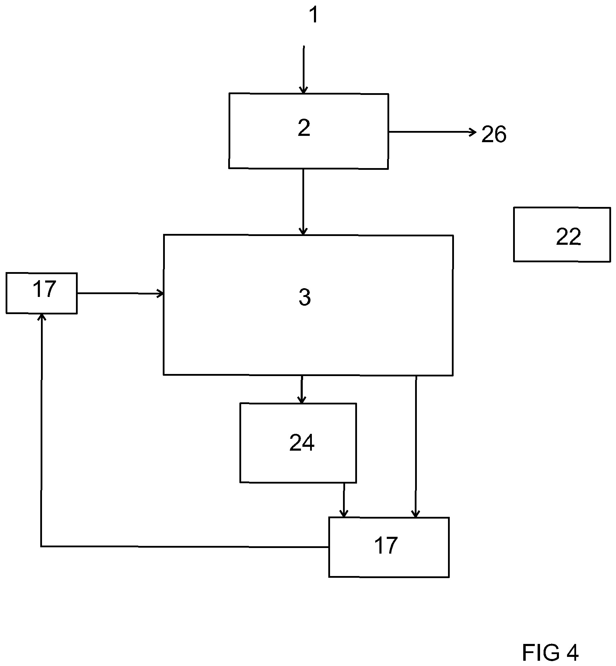

According to an embodiment disclosed in Fig. 4 an arrangement of the invention comprises a pre-treatment unit 2, and a vessel 3 for processing organic waste 1. The arrangement further comprises a solid reject container 24 for recovering reject 6. Exhaust gas 17 is discharged from the vessel or from the solid reject container. A portion of gas 12 is directed back to the vessel 3. Monitoring means 22 are included for monitoring the process.

An advantage of the present invention is that no organic or inert prop, such as lignin, is required. The arrangement of the present invention comprises a novel aeration system, and the movement of the organic waste 1 in the vessel 3. These features enable the microbiological decomposition to proceed as natural biochemical phases. Aerobic microbial decomposition produces reaction heat that is utilized to pre-heat when necessary. The aeration system of the present invention is rapid and safe. The present method and arrangement is especially suitable for use together with or in connection to a pneumatic vacuum powered pipeline system. The arrangement of the present invention may be a part of a pipeline system.

### List of reference numerals used

- 1.: Organic waste
- 2.: Pre-treatment unit
- 3.: Vessel
- 4.: Inlet
- 5.: Outlet
- 6.: Reject
- 7.: Supporting means
- 8.: Support structure
- 9.: Condensing means
- 10.: Moving means
- 11.: Supplying means
- 12.: Gas
- 13.: Recovering means
- 14.: Rotating means
- 15.: Pipe means
- 16.: Gas discharging means
- 17.: Exhaust gas
- 18.: Pre-treatment means
- 19.: Crushing means
- 20.: Heating means
- 21.: Cooling means
- 22.: Monitoring means
- 23.: Insulation means
- 24.: Solid reject container
- 25.: Condenser
- 26.: Water
- 27.: Shredder
- 28.: Filter
- 29.: Top
- 30.: Bottom
- 31.: Feeding means
- 32.: Blade

## Claims

1. An arrangement for processing organic waste (1), wherein the arrangement comprises
a vessel (3) for processing organic waste (1);
an inlet (4) for feeding organic waste (1) into the vessel (3);
an outlet (5) for discharging processed organic waste in the form of reject (6) from the vessel (3);
supporting means (7) comprising at least one support structure (8) for carrying organic waste (1) in said vessel (3);
moving means (10) for moving organic waste (1) on at least one support structure (8) in said vessel (3);
supplying means (11) for supplying gas (12) into said vessel (3); and
gas discharging means (16) for discharging exhaust gas (17);
**characterized in that**
said supplying means (11) which comprise at least one pipe means (15) projecting from at least one support structure (8) are configured to direct gas (12) into organic waste (1) carried on at least one support structure (8); and
said moving means (10) are configured to move organic waste (1) fed via the inlet (4) into the vessel (3) in direction from the inlet (4) to the outlet (5) to at least partly prevent incoming organic waste (1) to mix with organic waste (1) present in the vessel (3), wherein the moving means (10) are configured at the same time to move and turn over organic waste (1) on the support structure (8), and wherein said moving means (10) are configured to move organic waste (1) from the center of the support structure (8) to the edge of the support structure (8), or from the edge of the support structure (8) to the center of the support structure (8).

2. The arrangement according to claim 1, **characterized in that** the vessel (3) comprises a top (29) comprising the inlet (4) for feeding organic waste (1) into the vessel (3).

3. The arrangement according to claim 1 or 2, **characterized in that** the vessel (3) comprises a bottom (30) comprising the outlet (5) for discharging processed organic waste in the form of reject (6) from the vessel (3).

4. The arrangement according to any one of claims 1 to 3, **characterized in that** the arrangement further comprises recovering means (13) for recovering reject (6).

5. The arrangement according to any one of claims 1 to 4, **characterized in that** the vessel (3) comprises several support structures (8), and that the moving means (10) are configured to move organic waste (1) fed via the inlet (4) into the vessel (3) in direction from the inlet (4) to the outlet (5) from one support structure (8) to another support structure (8) to at least partly prevent incoming organic waste (1) to mix with the organic waste (1) present in the vessel (3).

6. The arrangement according to any one of claims 1 to 5, **characterized in that** the moving means (10) comprise one or more blades (32) having different blade angles on each support structure (8).

7. The arrangement according to any one of claims 1 to 6, **characterized in that** said supplying means (11) for supplying gas (12) into the vessel (3) are configured to feed air or oxygen, or a combination thereof.

8. The arrangement according to any one of claims 1 to 7, **characterized in that** the arrangement further comprises condensing means (9) for removing moisture from exhaust gas (17).

9. The arrangement according to any one of claims 1 to 8, **characterized in that** the arrangement further comprises one or more pre-treatment means (18) for processing organic waste (1) to be fed into the vessel (3), wherein the pre-treatment means (18) are selected from the group consisting of crushing means (19), heating means (20), and cooling means (21).

10. The arrangement according any one of claims 1 to 9, **characterized in that** the arrangement further comprises monitoring means (22) for monitoring the process.

11. The arrangement according to any one of claims 1 to 10, **characterized in that** the arrangement further comprises insulation means (23) for thermally insulating the vessel (3).

12. A method of processing organic waste, **characterized in that** the method comprises the steps of
providing an arrangement for processing organic waste (1) comprising a vessel (3) with an inlet (4) for feeding organic waste (1) into said vessel (3), and with an outlet (5) for discharging processed organic waste in the form of reject (6) from the vessel (3);
feeding organic waste (1) into said vessel (3) through the inlet (4);
moving organic waste (1) on at least one support structure (8) in said vessel (3) in direction from the inlet (4) to the outlet (5) to at least partly prevent incoming organic waste (1) to mix with organic waste (1) present in the vessel (3), wherein moving organic waste (1) comprises at the same time moving and turning over organic waste (1) on the support structure (8) with moving means (10) comprising one or more blades (32) having different blade angles on each support structure (8), and wherein moving means (10) move organic waste (1) from the center of the support structure (8) to the edge of the support structure (8), or from the edge of the support structure (8) to the center of the support structure (8); supplying gas (12) into organic waste (1) carried on at least one support structure (8) through at least one pipe means (15) projecting from at least one support structure (8);
discharging processed organic waste in the form of reject (6) from the vessel (3); and discharging exhaust gas (17) from the vessel (3) via gas discharging means (16).

13. The method according to claim 12, **characterized in that** the method further comprises a recovering step of at least partly recovering reject (6) that is discharged via the outlet (5).

14. The method according to claim 12 or 13, **characterized in that** using a vessel (3) comprising several support structures (8) and moving means (10) organic waste (1) fed via the inlet (4) into the vessel (3) is moved in direction from the inlet (4) to the outlet (5) from one support structure (8) to another support structure (8) to at least partly prevent incoming organic waste (1) to mix with the organic waste (1) present in the vessel (3).

15. The method according to any one of claims 12 to 14, **characterized in that** said gas (12) is air or oxygen, or a combination thereof.

16. The method according to any one of claims 12 to 15, **characterized in that** the method further comprises removing moisture from exhaust gas (17).

17. The method according to any one of claims 12 to 16, **characterized in that** the method further comprises at least one pre-treatment step for processing the organic waste (1) to be fed into the vessel (3), wherein the pre-treatment step is selected from the group consisting of crushing the organic waste (1), heating the organic waste (1), and cooling the organic waste (1).

18. The method according to any one of claims 12 to 17, **characterized in that** the method further comprises a step of monitoring temperature, pH value, and/or microbial activity of a process.

19. The method according to any one of claims 12 to 18, **characterized in that** the method comprises thermally insulating the vessel (3).

20. Use of the arrangement according to any one of claims 1 to 11, or the method according to any one of claims 12 to 19 for processing of organic waste (1).

21. Use of the arrangement according to any one of claims 1 to 11, or the method according to any one of claims 12 to 19 for processing of organic waste (1) in the form of household waste.

## Patentansprüche

1. Anordnung zur Behandlung von organischen Abfällen (1), wobei die Anordnung umfasst:
ein Gefäß (3) für die Behandlung von organischen Abfällen (1);
einen Einlauf (4) für das Eintragen von organischen Abfällen (1) in das Gefäß (3);
einen Auslauf (5) für das Austragen von behandelten organischen Abfällen in Form von Rejektstoff (6) aus dem Gefäß (3);
Stützmittel (7) umfassend wenigstens eine Tragstruktur (8) zum Stützen von organischen Abfällen (1) im Gefäß (3);
Bewegungsmittel (10) zum Transportieren von organischen Abfällen (1) auf wenigstens einer Tragstruktur (8) im Gefäß (3);
Zuführmittel (11) zum Einleiten von Gas (12) in das Gefäß (3); und
Gasaustragsmittel (16) zum Austragen von Abgas (17);
**dadurch gekennzeichnet,**
**dass** die Zuführmittel (11), die wenigstens ein aus der wenigstens einen Tragstruktur (8) herausragendes Rohrmittel (15) umfassen, so ausgestaltet sind, dass sie Gas (12) in organische Abfälle (1) einleiten, die auf wenigstens einer Tragstruktur (8) gestützt sind; und
**dass** die Bewegungsmittel (10) so ausgestaltet sind, dass sie organische Abfälle (1), die über den Einlauf (4) in das Gefäß (3) eingetragen werden, in der Richtung vom Einlauf (4) zum Auslauf (5) transportieren, um ein Vermischen einlaufender organischer Abfälle (1) mit im Gefäß (3) vorhandenen organischen Abfällen (1) wenigstens teilweise zu verhindern, wobei die Bewegungsmittel (10) so ausgestaltet sind, dass sie organische Abfälle (1) auf der Tragstruktur (8) gleichzeitig transportieren und umwenden, und wobei die Bewegungsmittel (10) so ausgestaltet sind, dass sie organische Abfälle (1) von der Mitte der Tragstruktur (8) zum Rand der Tragstruktur (8) oder vom Rand der Tragstruktur (8) zur Mitte der Tragstruktur (8) bewegen.

2. Anordnung nach Anspruch 1, **dadurch gekennzeichnet, dass** das Gefäß (3) ein Oberteil (29) umfasst, der den Einlauf (4) zum Eintragen von organischen Abfällen (1) in das Gefäß (3) umfasst.

3. Anordnung nach Anspruch 1 oder 2, **dadurch gekennzeichnet, dass** das Gefäß (3) ein Unterteil (30) umfasst, das den Auslauf (5) zum Austragen von behandelten organischen Abfällen in Form von Rejektstoff (6) aus dem Gefäß (3) umfasst.

4. Anordnung nach einem der Ansprüche 1 bis 3, **dadurch gekennzeichnet, dass** die Anordnung ferner Rückgewinnungsmittel (13) für die Rückgewinnung von Rejektstoff (6) umfasst.

5. Anordnung nach einem der Ansprüche 1 bis 4, **dadurch gekennzeichnet, dass** das Gefäß (3) mehrere Tragstrukturen (8) umfasst und dass die Bewegungsmittel (10) so ausgestaltet sind, dass sie organische Abfälle (1), die über den Einlauf (4) in das Gefäß (3) eingetragen werden, in der Richtung vom Einlauf (4) zum Auslauf (5) von einer Tragstruktur (8) zu einer anderen Tragstruktur (8) transportieren, um ein Vermischen einlaufender organischer Abfälle (1) mit im Gefäß (3) vorhandenen organischen Abfällen (1) wenigstens teilweise zu verhindern.

6. Anordnung nach einem der Ansprüche 1 bis 5, **dadurch gekennzeichnet, dass** die Bewegungsmittel (10) ein oder mehrere Blätter (32) mit unterschiedlichen Blattwinkeln auf jeder Tragstruktur (8) umfassen.

7. Anordnung nach einem der Ansprüche 1 bis 6, **dadurch gekennzeichnet, dass** die Zuführmittel (11) zum Einleiten von Gas (12) in das Gefäß (3) so ausgestaltet sind, dass sie Luft oder Sauerstoff oder eine Kombination derselben eintragen.

8. Anordnung nach einem der Ansprüche 1 bis 7, **dadurch gekennzeichnet, dass** die Anordnung ferner Kondensiermittel (9) für das Entfeuchten von Abgas (17) umfasst.

9. Anordnung nach einem der Ansprüche 1 bis 8, **dadurch gekennzeichnet, dass** die Anordnung ferner ein oder mehrere Vorbehandlungsmittel (18) zur Behandlung von ins Gefäß (3) einzutragenden organischen Abfällen (1) umfasst, wobei die Vorbehandlungsmittel (18) ausgewählt sind aus der Gruppe bestehend aus Brechmitteln (19), Heizmitteln (20) und Kühlmitteln (21).

10. Anordnung nach einem der Ansprüche 1 bis 9, **dadurch gekennzeichnet, dass** die Anordnung ferner Überwachungsmittel (22) für die Überwachung des Prozesses umfasst.

11. Anordnung nach einem der Ansprüche 1 bis 10, **dadurch gekennzeichnet, dass** die Anordnung ferner Isoliermittel (23) für die thermische Isolierung des Gefäßes (3) umfasst.

12. Verfahren zur Behandlung von organischen Abfällen, **dadurch gekennzeichnet, dass** das Verfahren die Schritte umfasst:
Bereitstellen einer Anordnung zur Behandlung von organischen Abfällen (1), umfassend ein Gefäß (3) mit einem Einlauf (4) zum Eintragen von organischen Abfällen (1) in das Gefäß (3) und einem Auslauf (5) zum Austragen von behandelten organischen Abfällen in Form von Rejektstoff (6) aus dem Gefäß (3);
Eintragen von organischen Abfällen (1) durch den Einlauf (4) in das Gefäß (3);
Transportieren von organischen Abfällen (1) auf wenigstens einer Tragstruktur (8) im Gefäß (3) in der Richtung vom Einlauf (4) zum Auslauf (5), um ein Vermischen von einlaufenden organischen Abfällen (1) mit im Gefäß (3) vorhandenen organischen Abfällen (1) wenigstens teilweise zu verhindern, wobei das Transportieren von organischen Abfällen (1) das gleichzeitige Bewegen und Umwenden von organischen Abfällen (1) auf der Tragstruktur (8) mit Bewegungsmitteln (10) umfasst, die ein oder mehrere Blätter (32) mit unterschiedlichen Blattwinkeln auf jeder Tragstruktur (8) umfassen, und wobei die Bewegungsmittel (10) organische Abfälle (1) von der Mitte der Tragstruktur (8) zum Rand der Tragstruktur (8) oder vom Rand der Tragstruktur (8) zur Mitte der Tragstruktur (8) bewegen;
Einleiten von Gas (12) in die von wenigstens einer Tragstruktur (8) gestützten organischen Abfälle (1) durch wenigstens ein aus der wenigstens einen Tragstruktur (8) herausragendes Rohrmittel (15);
Austragen von behandelten organischen Abfällen in Form von Rejektstoff (6) aus dem Gefäß (3); und
Austragen von Abgas (17) aus dem Gefäß (3) über Gasaustragsmittel (16).

13. Verfahren nach Anspruch 12, **dadurch gekennzeichnet, dass** das Verfahren ferner einen Rückgewinnungsschritt zum wenigstens teilweisen Rückgewinnen von durch den Auslauf (5) ausgetragenem Rejektstoff (6) umfasst.

14. Verfahren nach einem der Ansprüche 12 oder 13, **dadurch gekennzeichnet, dass** mit Hilfe eines Gefäßes (3), das mehrere Tragstrukturen (8) und Bewegungsmittel (10) umfasst, organische Abfälle (1), die über den Einlauf (4) in das Gefäß (3) eingetragen werden, in der Richtung vom Einlauf (4) zum Auslauf (5) von einer Tragstruktur (8) zu einer anderen Tragstruktur (8) transportiert werden, um ein Vermischen einlaufender organischer Abfälle (1) mit im Gefäß (3) vorhandenen organischen Abfällen (1) wenigstens teilweise zu verhindern.

15. Verfahren nach einem der Ansprüche 12 bis 14, **dadurch gekennzeichnet, dass** das Gas (12) Luft oder Sauerstoff oder eine Kombination derselben ist.

16. Verfahren nach einem der Ansprüche 12 bis 15, **dadurch gekennzeichnet, dass** das Verfahren ferner das Entfeuchten von Abgas (17) umfasst.

17. Verfahren nach einem der Ansprüche 12 bis 16, **dadurch gekennzeichnet, dass** das Verfahren ferner wenigstens einem Vorbehandlungsschritt zur Behandlung von ins Gefäß (3) einzutragenden organischen Abfällen (1) umfasst, wobei der Vorbehandlungsschritt ausgewählt ist aus der Gruppe bestehend aus Brechen von organischen Abfällen (1), Erwärmen von organischen Abfällen (1) und Kühlen von organischen Abfällen (1).

18. Verfahren nach einem der Ansprüche 12 bis 17, **dadurch gekennzeichnet, dass** das Verfahren ferner einen Schritt zur Überwachung der Temperatur, des pH-Wertes und/oder der mikrobiellen Aktivität eines Prozesses umfasst.

19. Verfahren nach einem der Ansprüche 12 bis 18, **dadurch gekennzeichnet, dass** das Verfahren das thermische Isolieren des Gefäßes (3) umfasst.

20. Verwendung der Anordnung nach einem der Ansprüche 1 bis 11 oder des Verfahrens nach einem der Ansprüche 12 bis 19 zur Behandlung von organischen Abfällen (1).

21. Verwendung der Anordnung nach einem der Ansprüche 1 bis 11 oder des Verfahrens nach einem der Ansprüche 12 bis 19 zur Behandlung von organischen Abfällen (1) in Form von Haushaltsabfällen.

## Revendications

1. Agencement pour le traitement de déchets organiques (1), ledit agencement comprenant :
un récipient (3) pour traiter des déchets organiques (1);
une entrée (4) pour introduire des déchets organiques (1) dans le récipient (3);
une sortie (5) pour évacuer du récipient (3), sous forme de refus (6), des déchets organiques traités;
des moyens d'appui (7) comprenant au moins une structure d'appui (8) pour soutenir des déchets organiques (1) dans le récipient (3);
des moyens de mouvement (10) pour déplacer des déchets organiques (1) sur au moins une structure d'appui (8) dans le récipient (3);
des moyens d'amenée (11) pour introduire du gaz (12) dans le récipient (3); et
des moyens d'évacuation de gaz (16) pour évacuer des gaz sortants (17);
**caractérisé en ce que**
les moyens d'amenée (11), qui comprennent au moins un moyen de conduit (15) en saillie sur ladite au moins une structure d'appui (8), sont configurés de manière à diriger du gaz (12) dans les déchets organiques (1) reposant sur ladite au moins une structure d'appui (8); et
les moyens de mouvement (10) sont configurés de manière à déplacer des déchets organiques (1) introduits via l'entrée (4) dans le récipient (3) dans le sens allant de l'entrée (4) vers la sortie (5) pour empêcher, au moins partiellement, les déchets organiques (1) entrants de se mélanger aux déchets organiques (1) présents dans le récipient (3), lesdits moyens de mouvement (10) étant configurés de manière à déplacer et en même temps remuer des déchets organiques (1) sur la structure d'appui (8), et lesdits moyens de mouvement (10) étant configurés de manière à déplacer des déchets organiques (1) depuis le centre de la structure d'appui (8) vers le bord de la structure d'appui (8) ou depuis le bord de la structure d'appui (8) vers le centre de la structure d'appui (8).

2. Agencement selon la revendication 1, **caractérisé en ce que** ledit récipient (3) comprend une partie supérieure (29) comprenant l'entrée (4) destinée à introduire des déchets organiques (1) dans le récipient (3).

3. Agencement selon la revendication 1 ou 2, **caractérisé en ce que** ledit récipient (3) comprend une partie inférieure (30) comprenant la sortie (5) destinée à évacuer du récipient (3), sous forme de refus (6), des déchets organiques traités.

4. Agencement selon l'une des revendications 1 à 3, **caractérisé en ce que** ledit agencement comprend également des moyens de récupération (13) pour récupérer des refus (6).

5. Agencement selon l'une des revendications 1 à 4, **caractérisé en ce que** ledit récipient (3) comprend plusieurs structures d'appui (8) et que les moyens de mouvement (10) sont configurés de manière à déplacer des déchets organiques (1) introduits via l'entrée (4) dans le récipient (3) dans le sens allant de l'entrée (4) vers la sortie (5) à partir d'une structure d'appui (8) vers une autre structure d'appui (8) pour empêcher, au moins partiellement, des déchets organiques (1) entrants de se mélanger avec des déchets organiques (1) présents dans le récipient (3).

6. Agencement selon l'une des revendications 1 à 5, **caractérisé en ce que** lesdits moyens de mouvement (10) comprennent une ou plusieurs pales (32) ayant des angles différents sur chaque structure d'appui (8).

7. Agencement selon l'une des revendications 1 à 6, **caractérisé en ce que** lesdits moyens d'amenée (11) destinés à introduire du gaz (12) dans le récipient (3) sont configurés de manière à amener de l'air ou de l'oxygène ou une combinaison de ceux-ci.

8. Agencement selon l'une des revendications 1 à 7, **caractérisé en ce que** ledit agencement comprend également des moyens de condensation (9) pour éliminer l'humidité des gaz sortants (17).

9. Agencement selon l'une des revendications 1 à 8, **caractérisé en ce que** ledit agencement comprend également un ou plusieurs moyens de prétraitement (18) pour traiter des déchets organiques (1) devant être introduits dans le récipient (3), lesdits moyens de prétraitement (18) étant choisis dans le groupe constitué par les moyens de broyage (19), moyens de chauffage (20) et moyens de refroidissement (21).

10. Agencement selon l'une des revendications 1 à 9, **caractérisé en ce que** ledit agencement comprend également des moyens de surveillance (22) pour le monitorage du processus.

11. Agencement selon l'une des revendications 1 à 10, **caractérisé en ce que** ledit agencement comprend également des moyens d'isolement (23) pour le calorifugeage du récipient (3).

12. Procédé de traitement de déchets organiques, **caractérisé en ce que** ledit procédé comprend les étapes consistant à :
Fournir un agencement pour le traitement de déchets organiques (1) comprenant un récipient (3) avec une entrée (4) destinée à introduire des déchets organiques (1) dans le récipient (3) et avec une sortie (5) destinée à évacuer du récipient (3), sous forme de refus (6), des déchets organiques traités;
Introduire des déchets organiques (1) par l'entrée (4) dans ledit récipient (3);
Déplacer des déchets organiques (1) sur au moins une structure d'appui (8) dans le récipient (3) dans le sens de l'entrée (4) vers la sortie (5) pour empêcher, au moins partiellement, des déchets organiques (1) entrants de se mélanger avec des déchets organiques (1) présents dans le récipient (3), ledit déplacement des déchets organiques (1) comprenant le déplacement et en même temps le remuage des déchets organiques (1) sur la structure d'appui (8) avec des moyens de mouvement (10) comprenant une ou plusieurs pales (32) avec des angles différents sur chaque structure d'appui (8), et lesdits moyens de mouvement (10) déplaçant des déchets organiques (1) du centre de la structure d'appui (8) vers le bord de la structure d'appui (8) ou du bord de la structure d'appui (8) vers le centre de la structure d'appui (8);
Introduire du gaz (12) dans les déchets organiques (1) reposant sur ladite au moins une structure d'appui (8) par au moins un moyen de conduit (15) en saillie sur ladite au moins une structure d'appui (8);
Évacuer du récipient (3), sous forme de refus (6), des déchets organiques traités; et
Évacuer du récipient (3) des gaz sortants (17) via des moyens d'évacuation de gaz (16).

13. Procédé selon la revendication 12, **caractérisé en ce que** ledit procédé comprend également une étape de récupération consistant à récupérer, au moins partiellement, des refus (6) évacués via la sortie (5).

14. Procédé selon l'une des revendications 12 ou 13, **caractérisé en ce que**, à l'aide d'un récipient (3) comprenant plusieurs structures d'appui (8) et moyens de mouvement (10), des déchets organiques (1) introduits via l'entrée (4) dans le récipient (3) sont déplacés dans le sens allant de l'entrée (4) vers la sortie (5) à partir d'une structure d'appui (8) vers une autre structure d'appui (8) pour empêcher, au moins partiellement, des déchets organiques (1) entrants de se mélanger avec des déchets organiques (1) présents dans le récipient (3).

15. Procédé selon l'une des revendications 12 à 14, **caractérisé en ce que** ledit gaz (12) est de l'air ou de l'oxygène ou une combinaison de ceux-ci.

16. Procédé selon l'une des revendications 12 à 15, **caractérisé en ce que** ledit procédé comprend également l'élimination de l'humidité des gaz sortants (17).

17. Procédé selon l'une des revendications 12 à 16, **caractérisé en ce que** ledit procédé comprend également une étape de prétraitement pour traiter des déchets organiques (1) devant être introduits dans le récipient (3), ladite étape de prétraitement étant choisie dans le groupe constitué par le broyage de déchets organiques (1), le chauffage de déchets organiques (1) et le refroidissement de déchets organiques (1).

18. Procédé selon l'une des revendications 12 à 17, **caractérisé en ce que** ledit procédé comprend également une étape consistant à surveiller la température, la valeur pH et/ou l'activité microbienne d'un processus.

19. Procédé selon l'une des revendications 12 à 18, **caractérisé en ce que** ledit procédé comprend également le calorifugeage du récipient (3).

20. Utilisation de l'agencement selon l'une des revendications 1 à 11 ou du procédé selon l'une des revendications 12 à 19 pour le traitement de déchets organiques (1).

21. Utilisation de l'agencement selon l'une des revendications 1 à 11 ou du procédé selon l'une des revendications 12 à 19 pour le traitement de déchets organiques (1) sous forme d'ordures ménagères.
